# EUROPEAN PATENT APPLICATION

(11) **EP 1 818 169 A1**
(43) Date of publication of application: **15.08.2007**
(21) Application number: 06126105.3
(22) Date of filing: 14.12.2006
(51) Int. Cl.: B32B 5/30, A41D 19/015

(54) **Glove having chemical and biological particulate barrier properties**

(30) Priority: 14.12.2005 US 300250
(71) Applicant: BHA Technologies, Inc., Kansas City, MO 64133 (US)
(72) Inventor: Bansal, Vishal, Overland Park, KS 66223 (US); King, Clare Rosemary, Providence, RI 02906 (US)
(74) Representative: Illingworth-Law, William Illingworth

(57) **Abstract**

A glove (10) having chemical barrier properties includes, in an exemplary embodiment, an outer shell (12) and an insert (14). The insert includes a first layer formed from a gas permeable liquid impermeable microporous membrane and a second layer including activated carbon. Optionally the insert includes a third layer formed from a textile.

## Description

### BACKGROUND OF THE INVENTION

This invention relates generally to gloves, and more particularly to a multi-layered glove having chemical barrier properties.

One known type of chemical barrier glove is a butyl rubber glove that is impervious to most chemicals, but is thick and bulky. Butyl rubber gloves can cause significant perspiration of the users hands which accumulates inside the glove. The hot and moist environment inside the glove can induce hand discomfort. Because the glove is thick and bulky, user's maneuverability/dexterity is decreased. In some instances a user can wear a cotton liner underneath the rubber glove to extend the time until perspiration accumulation and user discomfort. Also, the liner does not enhance the dexterity characteristics of the rubber glove.

Another type of chemical barrier glove is a multi-layered glove that includes an outer shell and a barrier insert that includes a gas and liquid impermeable material. This type of glove uses a thinner barrier layer than the glove described above and is therefore somewhat less bulky. Also, this glove does not permit the passage of moisture vapor which can aggravate the problem of perspiration accumulation.

Still another type of chemical barrier glove is a multi-layered glove that includes an outer shell and a barrier insert that includes a gas permeable, liquid impermeable material. This type of glove provides for breathability for user hand comfort. However, this type of glove does not protect the user's hands from chemical vapor attack due to the gas permeablity of the barrier insert.

### BRIEF DESCRIPTION OF THE INVENTION

In one aspect, a glove including an outer shell and an insert is provided. The insert includes a first layer formed from a gas permeable, liquid impermeable microporous membrane, and a second layer including activated carbon.

In another aspect, a chemical barrier insert for a glove having an outer shell is provided. The insert is sized and shaped to fit inside the outer shell of the glove. The insert includes a first layer formed from a gas permeable, liquid impermeable microporous membrane and a second layer including activated carbon.

In another aspect, a multi-layered glove comprising an outer shell and an insert is provided. The insert includes a first layer formed from a gas permeable liquid impermeable PTFE membrane, a coating applied to the PTFE membrane to provide oleophobic properties to the first layer, and a second layer including at least one of a plurality of activated carbon beads infused in a fiber-based textile material, and a textile comprising activated carbon fibers. The insert also includes a third layer formed from a textile. The second layer is laminated between the first and third layers. The insert is positioned inside the outer shell with the first layer adjacent an inner surface of the outer shell.

### BRIEF DESCRIPTION OF THE DRAWINGS

Embodiments of the present invention will now be described, by way of example only, with reference to the accompanying drawing, in which:
Figure 1 is an exploded schematic illustration of a multi-layered glove having chemical barrier properties in accordance with an exemplary embodiment of the present invention.
Figure 2 is an enlarged schematic illustration of a portion of the gas permeable, liquid impermeable membrane shown in Figure 1.
Figure 3 is an enlarged sectional schematic illustration of a portion of the membrane shown in Figure 1
Figure 4 is a sectional schematic illustration of the membrane shown in Figure 4 in accordance with another embodiment.

### DETAILED DESCRIPTION OF THE INVENTION

A multi-layered glove having chemical barrier properties is described in detail below. In one exemplary embodiment, the multi-layered glove includes an outer shell and a multi-layered insert that includes a gas permeable, liquid impermeable membrane layer, an activated charcoal layer, and optionally a textile layer. The insert is either removable or is formed as an integral part of the multi-layered glove. The glove is lightweight and provides for excellent user mobility and dexterity. The glove also provides protection from chemical agents, biological agents, aerosols, and liquid spills. The multi-layered glove meets the testing requirements of JSLIST (Joint Services Lightweight Integrated Suit Technology). In another exemplary embodiment, the multi-layered glove includes a textile liner attached to the inside of the liner for comfortable contact with a user's hand.

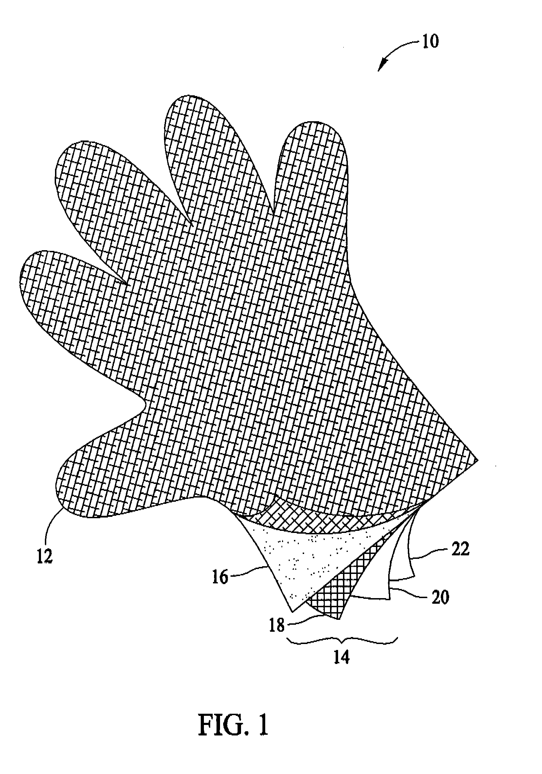

Referring to the drawings, Figure 1 is an exploded schematic illustration of a multi-layered glove 10 having chemical barrier properties in accordance with an exemplary embodiment of the present invention. Glove 10 includes an outer shell 12 and an insert 14. Insert 14 is formed from a gas permeable, liquid impermeable membrane 16, an activated carbon layer 18, and an optional textile layer 20. In another exemplary embodiment, a textile liner 22 is attached to the inside of liner 14.

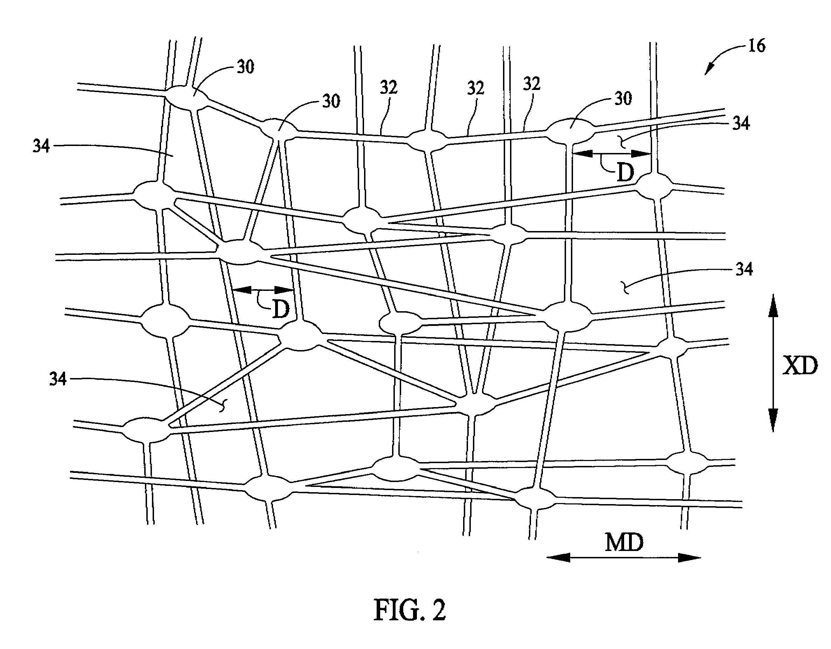

Referring also to Figure 2, membrane 16 includes a three-dimensional matrix or lattice type structure that is formed by a plurality of nodes 30 interconnected by a plurality of fibrils 32. Surfaces of nodes 30 and fibrils 32 define a plurality of pores 34 in membrane 16. Membrane 16 is made from any suitable material, and in the exemplary embodiment is made of expanded polytetrafluoroethylene (ePTFE) that has been at least partially sintered. Generally, the size of a fibril 32 that has been at least partially sintered is in the range of about 0.05 micron to about 0.5 micron in diameter taken in a direction normal to the longitudinal extent of the fibril. In the exemplary embodiment, membrane 16 has a weight of about 0.1 to about 1.0 ounces per square yard.

Surfaces of nodes 30 and fibrils 32 define numerous interconnecting pores 34 that extend completely through membrane 16 between opposite major side surfaces in a tortuous path. In the exemplary embodiment, the average effective pore size of pores 34 is sufficient to permit gases to pass through membrane 16 and prevent liquid from passing through membrane 16. A suitable average effective pore size D for pores 34 is in the range of about 0.01 micron to about 10 microns, and in another embodiment, in the range of about 0.1 micron to about 5.0 microns. In the exemplary embodiment, membrane 16 has an air permeability of at least about 0.10 cubic foot of air per minute per square foot of membrane 16 as measured by ASTM D-737. Also, in the exemplary embodiment, membrane 16 has a moisture vapor transmission rate greater than about 22,000 g/m²/day as measured by ISO 15496.

In the exemplary embodiment, membrane 16 is made by extruding a mixture of polytetrafluoroethylene (PTFE) fine powder particles and lubricant. The extrudate is calendered, and then the calendered extrudate is "expanded" or stretched in at least one and preferably two directions, MD and XD, to form fibrils 32 connecting nodes 30 to define a three-dimensional matrix or lattice type of structure. "Expanded" is intended to mean sufficiently stretched beyond the elastic limit of the material to introduce permanent set or elongation to fibrils 32. Membrane 22 is then heated or "sintered" to reduce and minimize residual stress in the membrane material by changing portions of the material from a substantially crystalline state to a substantially amorphous state. In an alternate embodiment, membrane 16 is unsintered or partially sintered as is appropriate for the contemplated end use of the membrane.

Other materials and methods can be used to form a suitable base membrane 16 that has an open pore structure. For example, other suitable materials include, but are not limited to, polyolefin, polyamide, polyester, polysulfone, polyether, acrylic and methacrylic polymers, polystyrene, polyurethane, polypropylene, polyethylene, and CaCO₃ filled polyethylene. Other suitable methods of making a porous membrane include foaming, skiving or casting any of the suitable materials.

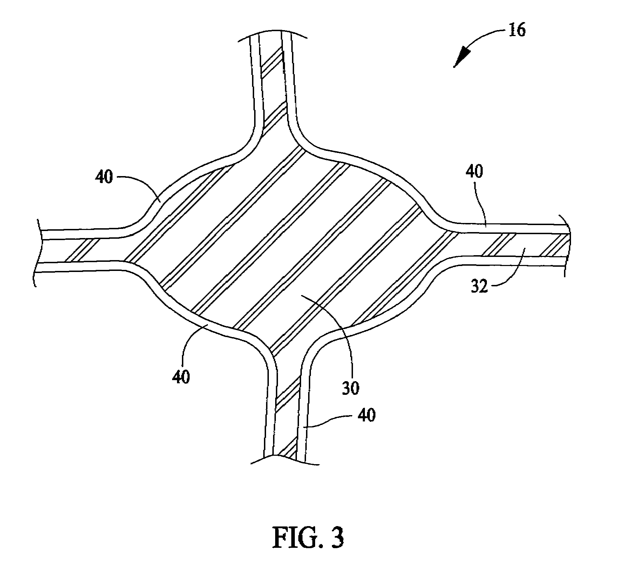

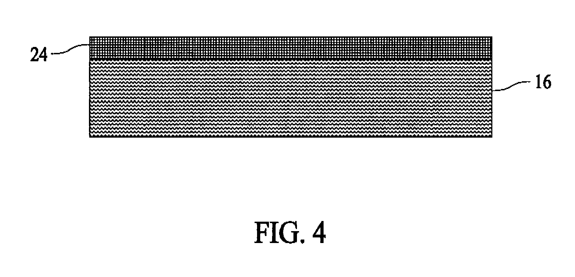

Referring also to Figure 3, in another embodiment, membrane 16 includes a treatment or coating 40 on surfaces of membrane 16, such as a fluorinated polymer material that enhances the oleophobic properties without compromising the gas permeability of membrane 16. Suitable examples of fluorinated polymer include, but are not limited to, fluorinated urethane polymers, perfluro alkyl acrylic(methacrylic) copolymers, random copolymers composed of fluorinated acrylate(methacylate), butyl acrylate or a comparable n-alkyl acrylate(methacrylate). Fluorinated polymers are available from DuPont under the trade name Zonyl®. In an alternate embodiment, where vapor transmission through membrane 16 is not needed, a continuous polyurethane layer 24 is applied to membrane 16 (shown in Figure 4). Polyurethane layer 24 can be formed by applying a polyurethane coating to membrane 16 of by laminating a polyurethane film to membrane 16.

Activated carbon layer 18, in one embodiment, is formed from a fiber based textile that is infused with activated carbon particles. In another embodiment, activated carbon layer 18 is formed from a textile made from activated carbon fibers. In another embodiment, activated carbon can be coated onto membrane 16 to form activated carbon layer 18.

Textile layer 20 is formed from a woven, nonwoven, or knitted textile constructed from fibers formed from at least one of polyamid, polyester, polyolefins, thermoplastic polyurethanes, elastomer (for example, HYTREL®), polyetherimide, liquid crystal polymers, polyphenyl ether, polyphenylene sulfide, cotton, and aramids. Textile layer 20 in one embodiment, has moisture wicking and anti-microbial properties for enhanced user comfort. In another embodiment, textile layer 20 is treated with a durable water repellent material. In alternate embodiments, textile layer 20 is formed from multiple layers of textile.

Textile liner 22 is also formed from a woven, nonwoven, or knitted textile constructed from fibers formed from at least one of polyamid, polyester, polyolefins, thermoplastic polyurethanes, elastomer (for example, HYTREL®), polyetherimide, liquid crystal polymers, polyphenyl ether, polyphenylene sulfide, cotton, and aramids. In another exemplary embodiment, textile liner 22 is treated with a durable water repellent material.

In the exemplary embodiment, insert 14 is formed by adhesively laminating PTFE membrane 16, activated carbon layer 18, and textile layer 20 together. Activated carbon layer 18 is laminated between membrane 16 and textile liner layer 20. Insert 14 has an air permeability of at least about 0.10 cubic foot of air per minute per square foot of insert 14 as measured by ASTM D-737. Also, insert 14 has a moisture vapor transmission rate of greater than about 7,000 g/m²/day as measured by ISO 15496. In another alternate embodiment, textile liner 22 is attached to the inside of insert 14 for comfortable contact with a users hand.

In alternate embodiments, membrane 16, activated carbon layer 18 and optionally textile layer 20 can be arranged in any order to form insert 14. Also, besides lamination, in one embodiment, insert 14 can be formed by stitching membrane 16, activated carbon layer 18 and textile layer 20 together. In another embodiment, welding techniques can be used to form insert 14. In another embodiment insert 14 does not include textile layer 20. In the exemplary embodiment, insert 14 is a removable unit. In an alternate embodiment, insert 14 and outer shell 12 are formed as one integral glove.

Outer shell 12 can be formed from any suitable material, for example, leather, polyamids, cotton, polyesters, aramids, and mixtures thereof. In one embodiment, the outer surface of outer shell 12 is treated with a water repellent to prevent liquids from penetrating through outer shell 12.

The above described multi-layered glove 10 provides user comfort including psychological, physical, and physiological. Glove 10 also permits a user to perform key tasks, for example, chemical clean-up and bio-hazard decontamination, for long lengths of time without removing glove 10. Further, glove 10 provides protection to the user from liquid and gaseous chemical agents, biological agents, aerosols, and liquid spills.

While the invention has been described in terms of various specific embodiments, those skilled in the art will recognize that the invention can be practiced with modification within the spirit and scope of the claims.

## Claims

1. A glove (10) comprising an outer shell (12) and an insert (14), said insert comprising:
a first layer comprising a gas permeable liquid impermeable microporous membrane having a first surface and an opposing second surface; and
a second layer comprising activated carbon.

2. A glove (10) in accordance with Claim 1 wherein said insert (14) further comprises a third layer comprising a textile, said first layer, said second layer, and said third layer arranged in any order.

3. A glove (10) in accordance with Claim 1 further comprising a textile liner attached to an inner surface of said insert (14) so that said textile liner is in contact with a hand of a user during use.

4. A glove (10) in accordance with Claim 1 wherein said second layer comprises a plurality of activated carbon beads infused in a textile material, or a textile comprising activated carbon fibers.

5. A glove (10) in accordance with Claim 1 wherein said activated carbon is coated on to at least one of said first and said second surface of said membrane to form said second layer.

6. A glove (10) in accordance with Claim 1 wherein said microporous membrane comprises at least one of PTFE, a CaCO₃ filled polyethylene, polyolefins, polyamides, polyesters, polysulfones, polyethers, acrylic and methacrylic polymers, polystyrenes, polyurethanes, and polypropylene.

7. A glove (10) in accordance with Claim 1 wherein said microporous membrane comprises a coating (40) rendering said microporous membrane oleophobic.

8. A glove (10) in accordance with Claim 1 wherein said outer shell (12) comprises at least one of leather, polyamids, cotton, polyesters, and aramids.

9. A glove (10) in accordance with Claim 2 wherein said third layer comprises a textile formed from at least one of polyamid fibers, polyester fibers, polyolefin fibers, thermoplastic polyurethane fibers, elastomer fibers, polyetherimide fibers, liquid crystal polymer fibers, polyphenyl ether fibers, polyphenylene sulfide fibers, cotton fibers, and aramid fibers.

10. A glove (10) in accordance with Claim 1 wherein said outer shell (12) and said insert (14) are formed as an integral glove.
